(19) Europäisches Patentamt
European Patent Office
Office européen des brevets

(11) EP 2 631 482 B1

(12) # EUROPEAN PATENT SPECIFICATION

(45) Date of publication and mention of the grant of the patent:
**05.12.2018 Bulletin 2018/49**

(21) Application number: **11843218.6**

(22) Date of filing: **24.11.2011**

(51) Int Cl.:
***F04B 27/08** (2006.01)* ***F16C 33/10** (2006.01)*
***F04B 7/00** (2006.01)* ***F16C 17/04** (2006.01)*

(86) International application number:
**PCT/JP2011/077043**

(87) International publication number:
**WO 2012/070615 (31.05.2012 Gazette 2012/22)**

(54) **SWASH PLATE COMPRESSOR**

TAUMELSCHEIBENVERDICHTER

COMPRESSEUR À PLATEAU OSCILLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2010 JP 2010260967**

(43) Date of publication of application:
**28.08.2013 Bulletin 2013/35**

(73) Proprietor: **Taiho Kogyo Co., Ltd**
**Toyota-shi**
**Aichi 471-8502 (JP)**

(72) Inventors:
- **NOMURA Satoshi**
**Toyota-shi**
**Aichi 471-8502 (JP)**
- **AKIZUKI Masanori**
**Toyota-shi**
**Aichi 471-8502 (JP)**
- **KANEMITSU Hiroshi**
**Toyota-shi**
**Aichi 471-8502 (JP)**

(74) Representative: **Cabinet Plasseraud**
**66, rue de la Chaussée d'Antin**
**75440 Paris Cedex 09 (FR)**

(56) References cited:
**EP-A1- 1 281 881**
**WO-A1-2007/091564**
**WO-A1-2010/073811**
**JP-A- 11 022 640**
**JP-A- 61 135 990**
**JP-A- 61 167 180**
**JP-A- 62 041 980**
**JP-B2- 4 376 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a swash plate type compressor, and relates to a swash plate type compressor arranged with a swash plate which rotates around a shaft, a piston which moves back and forth with the rotation of the swash plate, and a shoe formed with a flat part which slides against the swash plate and a spherical surface part which slides in a spherical groove part formed on the piston.

### BACKGROUND OF THE INVENTION

Conventionally, a swash plate type compressor is known arranged with a swash plate which rotates around a shaft, a piston which moves back and forth with the rotation of the swash plate, and a shoe formed with a flat part which slides against the swash plate and a spherical surface part which slides in a spherical groove part formed on the piston (patent documents 1, 2).

A coating layer comprised from a resin is formed on the surface of the swash plate, and spiral or concentric shaped grooves formed with the center of the swash plate at the center on the surface of the coating layer in the swash plate type compressor in patent document 1 in order to improve lubrication between the shoe and swash plate.

In addition, the conventional swash plate type compressor described in patent document 1 etc generally has a flat part with a diameter of about 11-12mm.

### PRIOR ART

### PATENT DOCUMENTS

Patent Document 1: International Published Patent WO2002-075172

### SUMMARY OF THE INVENTION

### PROBLEMS TO BE SOLVED BY THE INVENTION

Here, because the shoe is pressed against the swash plate by the reciprocating movement of the piston, the larger the diameter of the flat part of the shoe, the greater is the friction between the shoe and the swash plate which causes problems to the fuel consumption capacity of an engine which runs a swash plate type compressor.

Thus, reducing the friction between the shoe and swash plate and improving fuel consumption of an engine which runs a swash plate type compressor can be expected in order to tackle this type of problem by reducing the diameter of the flat part of the shoe.

However, if the diameter of the flat part of the shoe is reduced, a load is concentrated on the sections which contact with the flat part where the concentrics protrude causing the concentric protrusions to elastically deform and when the shoe slides against the swash plate, a shear resistance generated between the shoe and concentric protrusions causes wear to the coating layer and when the concentric protrusions disappear, the affinity between the shoe and swash plate or lubrication retention worsens.

Thus in order to solve these problems, the present invention provides a swash plate type compressor which can reduce friction with the swash plate and reduce wear of a coating layer by reducing the diameter of the flat part of a shoe.

### MEANS FOR SOLVING THE PROBLEMS

That is, a swash plate type compressor of claim 1 is arranged with a swash plate which rotates around a shaft, a piston formed with a spherical indent part and which moves back and forth with the rotation of the swash plate, and a shoe formed with a flat part which slides against the swash plate and a spherical surface part which slides in the spherical indent part formed on the piston, wherein a coating layer comprised from a resin is formed on the surface of the swash plate, and spiral or concentric shaped grooves are formed with the center of the swash plate at the center on the surface of the coating layer, a diameter of the flat part is set at less than 10.5mm and the pitch of a concentric protrusion formed between the concentric shaped grooves is set to satisfy the following conditions:

[Formula 1]

$$\sum_{k=1}^{N} L_k > 300\ (mm)$$

L=length (mm) of the concentric protrusion which contact the flat part of the shoe, N=number of concentric protrusions which contact the flat part of the shoe.

EFFECTS OF THE INVENTION

According to the structure described above, even if friction between the shoe and swash plate is reduced by reducing the diameter of the flat part of the shoe compared to a conventional shoe, by increasing the length of a concentric protrusion which contacts with the flat part of a shoe using the formula described above, it is possible to disperse surface pressure on the flat part across multiple concentric protrusions, reduce elastic deformation of the concentric protrusions, reduce shear resistance between the shoe and concentric protrusions, and reduce wear of the coating layer.

BRIEF EXPLANATION OF THE DRAWINGS

Fig. 1 is a cross sectional diagram of a swash plate type compressor.
Fig. 2 is an expanded view diagram of a shoe and a swash plate.
Fig. 3 shows the state of a concentric protrusion which contacts with a flat part of the shoe.
Fig. 4 shows the state of the shoe and the swash plate which satisfy the conditions of formula 1.
Fig. 5 is a graph showing experiment results.
Fig. 6 is a graph showing experiment results.
Fig. 7 is a graph showing experiment results.
Fig. 8 is a cross sectional diagram of a shoe including other shapes.

EMBODIMENTS FOR REALIZING THE INVENTION

Explaining the embodiments illustrated below, Fig. 1 shows the internal structure of a swash plate type compressor 1, a shaft 2 supported by a housing which is not shown, a swash plate 3 attached to the shaft 2, a plurality of pistons 4 which move back and forth within a cylinder not shown in the housing, and a plurality of shoes 5 arranged so as to face the interior of each piston 4 and which fasten the swash plate 3.
The swash plate 3 is either fixed diagonally with respect to the shaft 2 or the inclination of the swash plate 3 can be changed and is fastened by two shoes 5 for each piston 4.
The pistons 4 are formed with a spherical indent part 4a so that each mutually faces each other and the rotation of the swash plate 3 is converted to back and forth movement of the piston 4 while the shoe 5 slides against the indent part 4a.
Furthermore, the swash plate type compressor 1 having this type of structure is a conventionally known compressor and thus further explanation is omitted.
The shoe 5 of the present embodiment is manufactured a sintered material or resin material etc in addition to a steel, copper, aluminum material and a forged or rolled SUJ2 manufactured shoe 4 is preferred.
Fig. 2 shows an expanded view diagram of the vicinity of the shoe 5. The shoe 5 is formed from a flat part 5a which slides against the swash plate 3, a spherical surface part 5b which slides against the indent part 4a of the piston 4, a recess part 5c comprised from a curved surface formed to surround the spherical surface part 5b, and a flat taper part 5d formed to surround the flat part 5a. Furthermore, Fig. 2 is an exemplary diagram and exaggerates the scale of a part of the actual shape of the shoe 5.
The flat part 5a and the taper part 5d are connected by a smooth surface, the flat part 5a is formed from a roughly flat surface which does not include the smooth curved surface described above and includes a circle shape which has a diameter set to d<10.5mm. This diameter d is preferred to be set to 3.5mm $\leqq$d $\leqq$9.5mm, and more preferably 5.5mm $\leqq$d$\leqq$8.5mm.
That is, the flat part 5a of the present embodiment has a smaller diameter than a flat part of a conventionally known shoe of 11~12mm.

Here, the diameter d of the flat part, that is, the boundary between the flat part 5a and the smooth curved surface can be recognized by measuring the flat part 5a using a scale where vertical magnification (magnification in the height direction of the shoe) is 100 larger than horizontal magnification (magnification is a radial direction of the shoe).

The spherical surface part 5b and recess part 5c are each formed by a curved surface and the taper part 5d formed between the recess part 5c and flat part 5a inclines in a direction offset from the swash plate 3 with respect to the flat part 5a.

Furthermore, a dimple may be formed at the center of the flat part 5a of the shoe 5 or other parts and the flat part 5a may have a raised center shape.

Next, the swash plate 3 of the present embodiment is formed from a base 3a formed in a disc shape, and a coating layer 3b formed on the surface of the base 3a. A spiral shaped concentric groove 3c is formed on the surface of the coating layer 3b so as to surround the shaft 22.

The base 3 is manufactured by a steel, copper or aluminum material and in the case where an intermediate later is arranged between the base 3a and coating layer 3b, it is possible to form the base using a method such as steel sinteconcentric, copper spraying, aluminum spraying, or copper aluminum spraying etc.

The coating layer 3b is formed by adding a solid lubricant to a thermoset resin binder and a polyimide group resin (PI), polyamide-imide group resin (PAI), epoxy resin, phenol resin etc, or polyamide (nylon), elastomer may be used as the thermoset resin binder.

Molybdenum disulfide ($MoS_2$), polytetrafluoroethylene (PTFE), tungsten disulfide ($WS_2$), hexagonal boron nitride (h-BN), graphite fluoride (CF), or fluoride resin can be used as the solid lubricant and the particle diameter is preferred to be 15μm or less and more preferably 0.2~10μm with a contained ratio of 5-8% by weight.

Furthermore, hard particles may be added to the coating layer 3b. An oxide such as alumina or silica, a nitride such as silicon nitride (SiN), a carbide such as silicon carbon (SiC) or a sulfide such as zinc sulfide (ZnS) are examples of the hard particle with a preferred particle diameter of 0.01~μm and a contained ratio of 0.2-7% by weight.

The concentric groove 3c is formed by mechanical processing after forming the coating layer 3b on the surface of the substrate 3a and can be formed into a concentric shape as well as a spiral shape.

With this type of structure, the concentric projection 3d formed between adjacent concentric grooves 3c contacts the flat part 5a of the shoe shown in Fig. 3 in a stripe shape. Furthermore, Fig. 3 is also an exemplary diagram which describes a different scale to the actual scale of the concentric protrusion 3d.

In addition, in the swash plate type compressor 1 of the present embodiment, the pitch of the concentric protrusion 3d with respect to the small diameter shoe 5 described above is set so as to satisfy the following relationship.

[formula 1]

$$\sum_{k=1}^{N} L_k > 300\ (mm)$$

(L: length of the concentric protrusion 3d which contacts the flat part 5a, N: number of concentric protrusions which contact with the flat part 5a)

On the left side of formula 1 the length of the concentric protrusion 3d which contacts on the left side of the flat part 5a shown in Fig. 3 is L1 and the length of the adjacent concentric protrusion 3d is L2, and in the case where the length of the concentric protrusion 3d positioned on the right end of the diagram is Ln, it is possible to describe the right side of formula 1 as L1+L2...;Ln.

That is, formula 1 expresses the fact that the sum of the lengths of the concentric protrusions which contact the flat part 5a equals 300mm or more and if the diameter of the flat part 5a of the shoe 5 is set at 5.5mm, 69 concentric protrusions 3d contact with the flat part 5a and the pitch of the concentric protrusions 3d is set at 0.079mm or less.

In addition, in the swash plate type compressor 1 arranged with the small diameter shoe 5 described above, it is possible to obtain the following effects when the conditions in formula 1 are satisfied.

First, when the swash plate type compressor 1 is operated, the indent part 4a of the piston 4 sways while the shoe 5 arranged to sandwich the swash plate 3 slides against the swash plate 3 when the swash plate 3 rotates which causes the piston 4 to move back and forth.

The shoe 5 is applied with pressure by the surface of the swash plate 3 with the back and forth movement of the piston 4 ,and the diameter of the flat part 5a of the shoe 5 is set at less than 10.5mm which is smaller than a conventional shoe 5.

As a result, friction between the shoe 5 and the swash plate 3 is reduced and because it is possible to run the swash plate 3 with a small amount of power, it is possible to improve fuel consumption of an engine which runs the swash plate type compressor 1.

When the coating layer 3b of the swash plate 3 is applied with pressure by the back and forth movement of the piston 4, the concentric protrusion 3d is elastically modified by the surface pressure of the flat part 5a of the shoe 5 and the shoe 5 sinks by a depth amount H of the elastic modification with respect to the swash plate 3.

Here, because the swash plate type compressor 1 of the present embodiment satisfies the conditions of formula 1 described above, the sum of the lengths of the concentric protrusions 3d which contact with the flat part 5a equal 300mm or more and in the case where the diameter of the flat part 5a is set at 5.5mm, 69 concentric protrusions 3d or more contact the flat part 3a.

Consequently, the surface pressure of the flat part 5a is dispersed among a plurality of concentric protrusions 3d which contact the flat part 5a and it is possible to make the depth H of the elastic modification described above more shallow by increasing the sum of the length of the concentric protrusions 3d which contact in the present embodiment.

If the elastic modification depth H is shallow, it is possible to reduce the shear resistance which occurs when the concentric protrusion 3d of the shoes 5 is elastically modified when the shoe 5 slides in a circular direction with respect to the swash plat 3, and it is possible to reduce wear of the coating layer 3b (see Fig. 4).

Although arranged with the same shoe 5 as the shoe 5 described above, Fig. 4 shows a cross sectional view of the shoe 5 and swash plate 3 of the swash plate type compressor 1 which does not satisfy the conditions of formula 1, Fig. 4 (a) shows a cross sectional view in a radial direction of the swash plate 3 and Fig. 4 (b) shows a cross sectional view along a circumferential direction of the swash plate 3. In addition, Fig. 4 describes a scale different to the actual scale.

The sum of the lengths of the concentric protrusions 3d which contact the flat part 5a of the swash plate type compressor 1 shown in Fig. 4 is less than 300mm.

Consequently, because the surface pressure which is dispersed over each concentric protrusion 3d is large and because the concentric protrusion 3d is greatly elastically modified and the depth H of elastic modification increases, when the shoe 5 slides in a circumferential direction with respect to the swash plate 3 as is shown in Fig. 4 (b), shoe shear resistance generated when the concentric protrusion 3d elastically modifies increases and the amount of wear of the coating layer 3b increases.

Fig. 5 shows a graph which shows experiment results with regards to the swash plate type compressor 1 related to the present embodiment. In the graph, the left side of the formula 1 on the horizontal axis, that is, the sum of the lengths of the concentric protrusions 3d which contact with the flat part 5a is shown, and the seizure load of the swash plate 3 and wear depth of the coating layer 3b on the swash plate 3 are shown on the vertical axis. Furthermore, the number of concentric protrusions 3d which contact with the flat part 5a of the shoe 5 is also displayed on the horizontal axis for reference.

A shoe 5 with a flat part 5a having a diameter of 5.5mm is used in each of the experiments, the coating layer 3b on the swash plate 3 has a mixed ratio with a thermoset resin of 45% and solid lubrication of 55% and thickness set at 25$\mu$m.

Furthermore, 3 types of swash plate 3 are prepared in which the sum of the lengths of the concentric protrusions 3d which contact with the flat part 5a of the shoe 5 equal 160mm, 240mm and 320mm respectively, and the pitch of each concentric protrusion 3d is 0.15mm, 0.10mm and 0.075mm.

In addition, the experiment was performed by applying a gradually increasing load of 519-1735N to the shoe 5 while rotating the swash plate 3 at 9500rpm in a refrigerant/refrigerant oil mixed compressor intake atmosphere. Furthermore the experiment conditions were also applied to the experiment in Fig. 6 and Fig. 7.

First, the experiment results related to the relationship between the sum of the lengths of the concentric protrusions 3d which contact the flat part 5a and a seizure load are explained. In the case where the sum of the lengths of the concentric protrusions 3d which contact the flat part 5a is 300mm or more, no seizure occurred even after applying a load of 1700N or more, however, seizure occurred with a load of about 700N when the sum was 240mm.

Next, the experiment results related to the relationship between the sum of the lengths of the concentric protrusions 3d which contact with the flat part 5a and the depth of wear of the coating layer 3b on the swash plate 3 are explained. In the case where the sum of the lengths of the concentric protrusions 3d which contact the flat part 5a is 300mm or more, although wear depth was reduced to about 3$\mu$m, wear depth was about 6$\mu$m when the sum was 160mm.

Fig. 6 shows experiment results in the case where the same experiment as in Fig. 5 is performed with respect to the shoe 5 with a flat part 5a having a diameter of 9.5mm.

3 types of swash plate 3 used in this experiment are prepared in which the sum of the lengths of the concentric protrusions 3d which contact with the flat part 5a of the shoe 5 equal 280mm, 470mm and 710mm respectively, and the pitch of each concentric protrusion 3d is 0.10mm, 0.15mm and 0.25mm.

First, the experiment results related to the relationship between the sum of the lengths of the concentric protrusions 3d which contact the flat part 5a and a seizure load are explained. In 2 swash plates 3 where the sum of the lengths of the concentric protrusions 3d which contact the flat part 5a exceeds 300mm, no seizure occurred even after applying a load of 1700N or more, however, seizure occurred with a load of about 1400N when the sum was 280mm.

Next, the experiment results related to the relationship between the sum of the lengths of the concentric protrusions 3d which contact with the flat part 5a and the depth of wear of the coating layer 3b on the swash plate 3 are explained. In 2 swash plates 3 where the sum of the lengths of the concentric protrusions 3d which contact the flat part 5a exceeds 300m, although wear depth was reduced to about 2μm, wear depth was about 4μm when the sum was 280mm.

Fig. 7 shows the experiment results related to the relationship between the diameter of the flat part 5a of the shoe 5 and a friction coefficient. In this graph, the diameter of the flat part of the shoe 5 is shown in the horizontal axis and the friction coefficient which occurs between swash plates 3 is shown on the vertical axis.

The pitch of the concentric protrusions 3d of the swash plate 3 used in the present experiment is 0.15mm and a shoe 5 with flat parts 5a having a diameter of 5.5mm. 7.5mm, 9.5mm and 11.5mm was used.

Among these shoes 5, shoes 5 with a flat part 5a having a diameter of 5.5mm, 7.5mm and 9.5mm respectively are equivalent to the present invention which satisfies the requirements of formula 1 described above and the shoe 5 with a flat part 5a diameter of 11.5mm is equivalent to a conventional shoe with a general size.

According to the experiments, it can be seen that the friction coefficient decreases as the diameter of the flat part 5a decreases.

Furthermore, the shape of the shoe 5 described above may be any shape other than that described in the present embodiment.

For example, as is shown in Fig. 8, the shoe 5 may have a column shape part 5e formed between the spherical surface part 5b and the flat part 5a and a flange 5f arranged on the spherical surface part side which forms the spherical surface part 5b on a boundary part between the column part 5e and the spherical part 5b and which protrudes outwards in a radial direction.

By adopting this type of structure it is possible to reduce only the diameter of the flat part while maintaining the spherical surface part at the same conventional size and reduce the weight of the shoe 5.

[EXPLANATION OF THE SYMBOLS]

1 Swash Plate Type Compressor
3 Swash Plate
3b Coating Layer
3c Concentric Groove
3d Concentric Protrusion
4 Piston
5 Shoe
5a Flat part

## Claims

**1.** A swash plate type compressor comprising:

a swash plate (3) which rotates around a shaft (2);
a piston (4) formed with a spherical indent part and which moves back and forth with the rotation of the swash plate; and
a shoe (5) formed with a flat part which slides against the swash plate and a spherical surface part which slides in the spherical indent part formed on the piston;
wherein
a coating layer (3b) comprised from a resin is formed on the surface of the swash plate, and spiral or concentric shaped grooves (3c) are formed with the center of the swash plate at the center on the surface of the coating layer, a diameter (d) of the flat part is set at less than 10.5mm **characterized in that** the pitch of a concentric protrusion formed between the concentric shaped grooves is set to satisfy the following conditions:

[Formula 1]

$$\sum_{k=1}^{N} L_k > 300\ (\mathrm{mm})$$

L=length (mm) of the concentric protrusion which contact the flat part of the shoe, N=number of concentric protrusions which contact the flat part of the shoe.

2. The swash plate type compressor according to claim 1, wherein a taper part is formed so as to surround the flat part and the flat part and the taper part are connected by a smooth surface.

## Patentansprüche

1. Taumelscheibenkompressor mit:

einer Taumelscheibe (3), die sich um eine Welle (2) dreht;
einem Kolben (4), der mit einem kugelförmigen Vertiefungsabschnitt ausgebildet ist und der sich mit der Drehbewegung der Taumelscheibe hin- und hergehend bewegt; und
einem Schuh (5), der mit einem flachen Abschnitt ausgebildet ist, der gegen die Taumelscheibe gleitet, und ein kugelförmiger Oberflächenabschnitt, der in dem am Kolben ausgebildeten kugelförmigen Vertiefungsabschnitt gleitet, wobei
eine ein Harz aufweisende Überzugsschicht (3b) auf der Oberfläche der Taumelscheibe ausgebildet ist, und wobei spiralförmig oder konzentrisch geformte Nuten (3c) mit der Mitte der Taumelscheibe an der Mitte auf der Oberfläche der Überzugsschicht ausgebildet sind, wobei ein Durchmesser (d) des flachen Abschnitts kleiner ist als 10,5 mm;
**dadurch gekennzeichnet, dass**
die Teilung eines zwischen den konzentrisch geformten Nuten ausgebildeten konzentrischen Vorsprungs derart eingestellt ist, dass sie die folgende Bedingung erfüllt:

[Formel 1]

$$\sum_{k=1}^{N} L_K > 300\ (\mathrm{mm}),$$

wobei L = Länge (mm) des konzentrischen Vorsprungs, die mit dem flachen Abschnitt des Schuhs in Kontakt steht, und N = Anzahl der konzentrischen Vorsprünge, die mit dem flachen Abschnitt des Schuhs in Kontakt stehen.

2. Taumelscheibenkompressor nach Anspruch 1, wobei ein sich verjüngender Abschnitt derart ausgebildet ist, dass er den flachen Abschnitt umgibt, und wobei der flache Abschnitt und der sich verjüngende Abschnitt durch eine glatte Fläche verbunden sind.

## Revendications

1. Compresseur à plateau oscillant, comprenant :

un plateau oscillant (3) qui entre en rotation autour d'un arbre (2) ;
un piston (4) formé avec une partie d'indentation sphérique et qui se déplace en va-et-vient avec la rotation du plateau oscillant ; et
un sabot (5) formé avec une partie plate qui coulisse contre le plateau oscillant et une partie de surface sphérique qui coulisse dans la partie d'indentation sphérique formée sur le piston ;

dans lequel
une couche de revêtement (3b) composée d'une résine est formée sur la surface du plateau oscillant, des rainures en forme de spirale ou concentrique (3c) sont formées avec le centre du plateau oscillant au centre sur la surface de la couche de revêtement,
un diamètre (d) de la partie plate est établi à moins de 10,5 mm, **caractérisé en ce que** le pas d'une protubérance concentrique formée entre les rainures de forme concentrique est établi pour satisfaire aux conditions suivantes :

[Formule 1]

$$\sum_{k=1}^{N} L_K > 300 \text{ (mm)},$$

L = longueur (mm) de la protubérance concentrique qui entre en contact avec la partie plate du sabot,
N = nombre de protubérances concentriques qui entrent en contact avec la partie plate du sabot.

**2.** Compresseur à plateau oscillant selon la revendication 1, dans lequel une partie conique est formée afin d'entourer la partie plate et la partie plate et la partie conique sont raccordées par une surface lisse.

Fig. 1

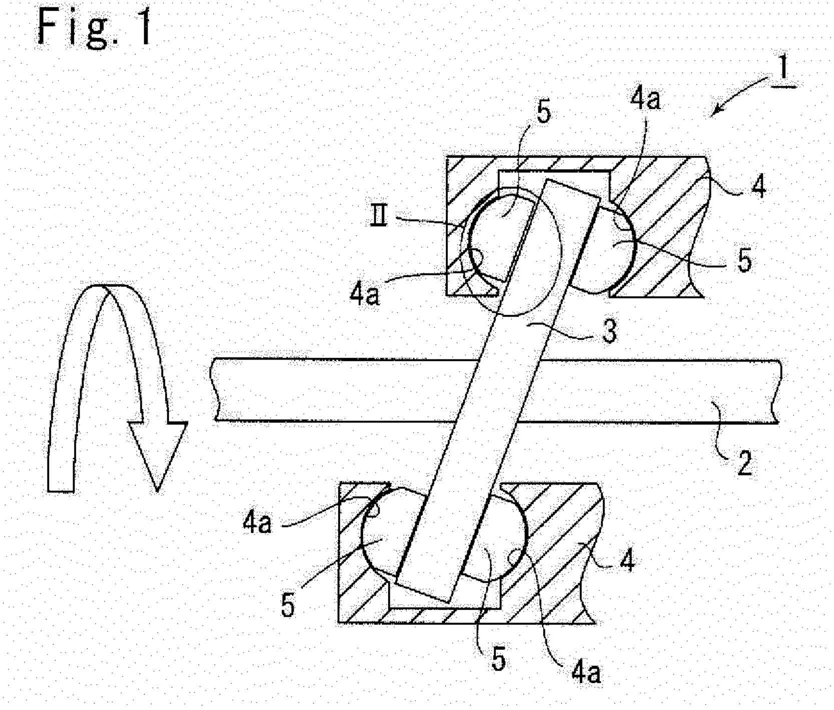

Fig. 2

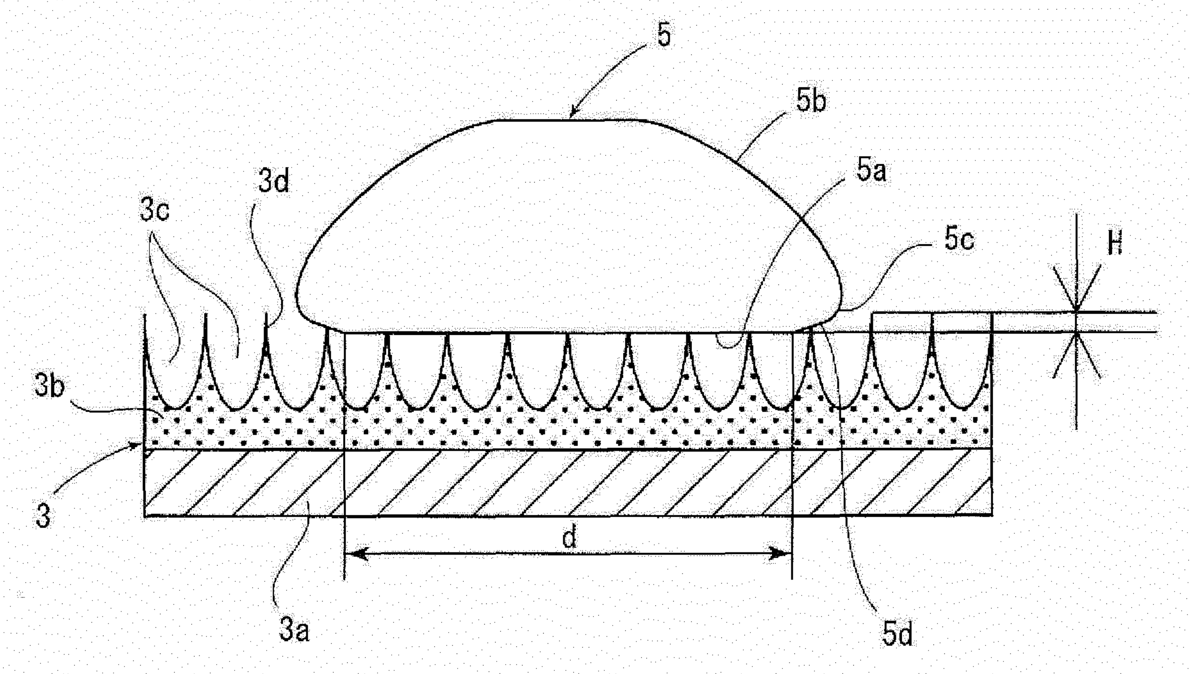


Fig. 3

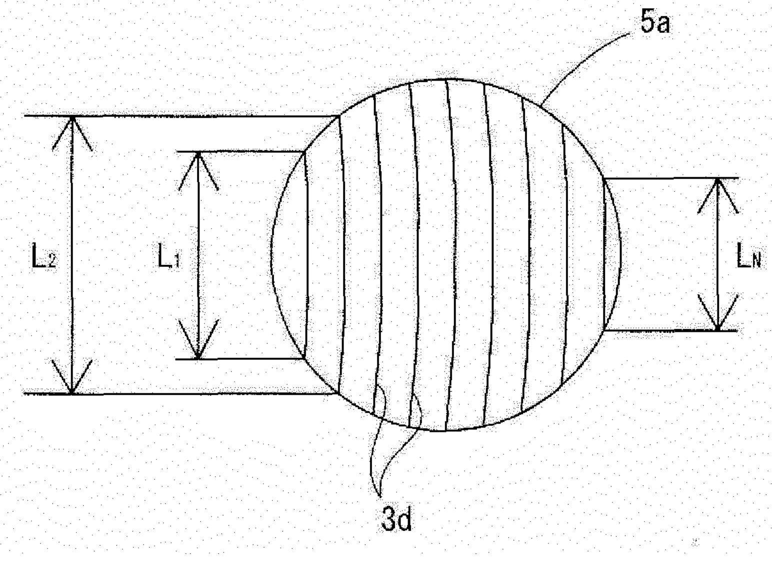

Fig. 4

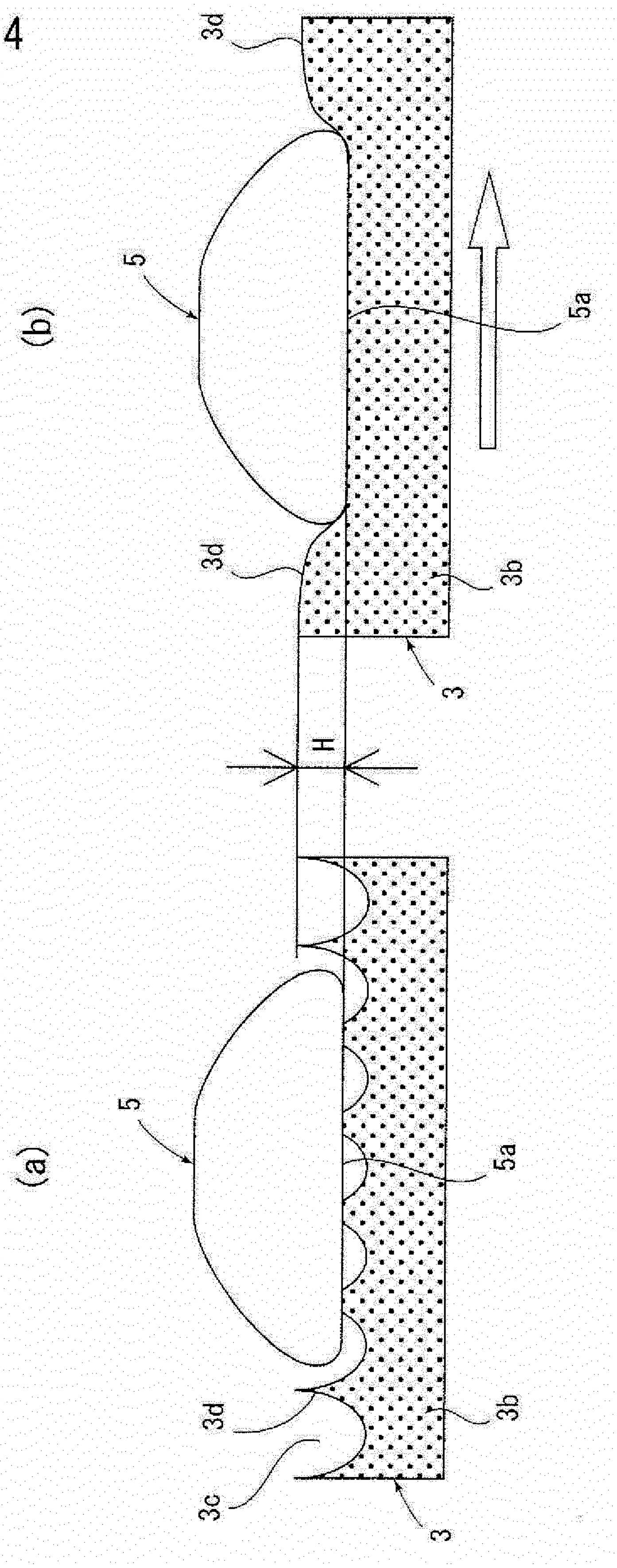

Fig. 5

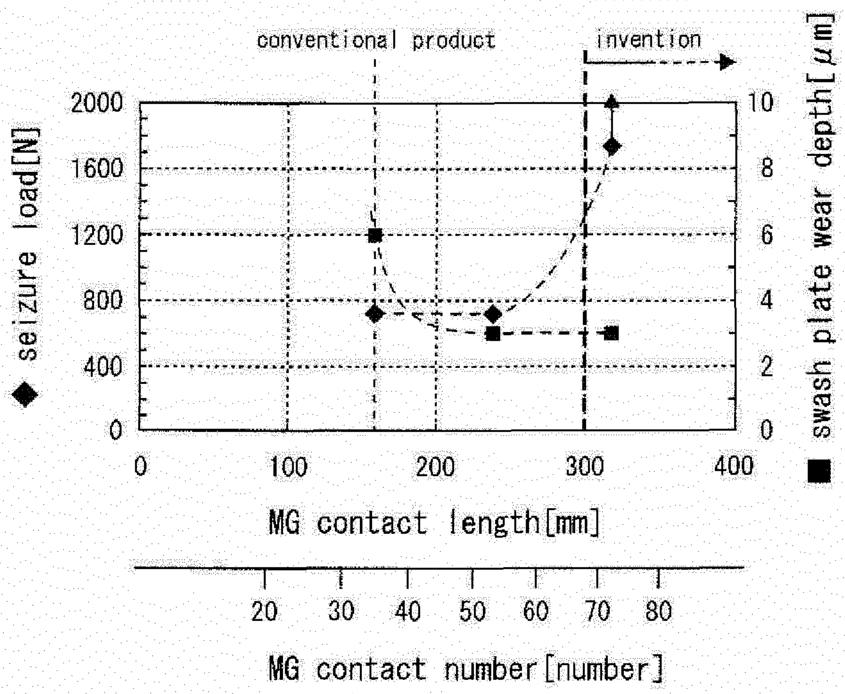
conventional product
invention
◆ seizure load[N]
2000
1600
1200
800
400
0
swash plate wear depth[μm] ■
10
8
6
4
2
0
0
100
200
300
400
MG contact length[mm]
20
30
40
50
60
70
80
MG contact number[number]

Fig. 6

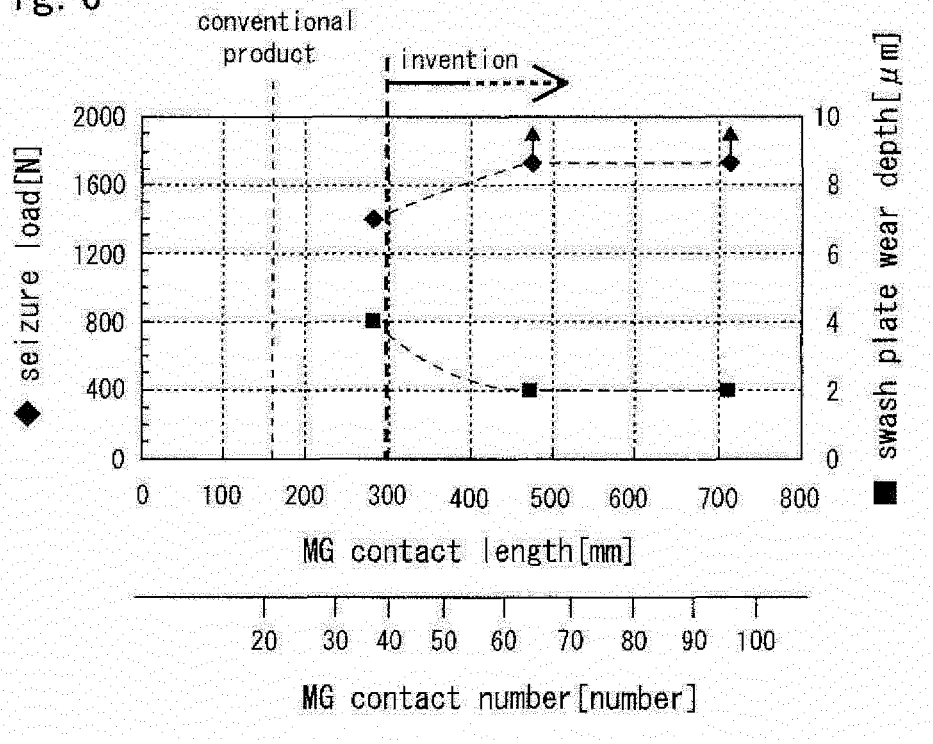
conventional product
invention
◆ seizure load[N]
2000
1600
1200
800
400
0
swash plate wear depth[μm] ■
10
8
6
4
2
0
0
100
200
300
400
500
600
700
800
MG contact length[mm]
20
30
40
50
60
70
80
90
100
MG contact number[number]

Fig. 7

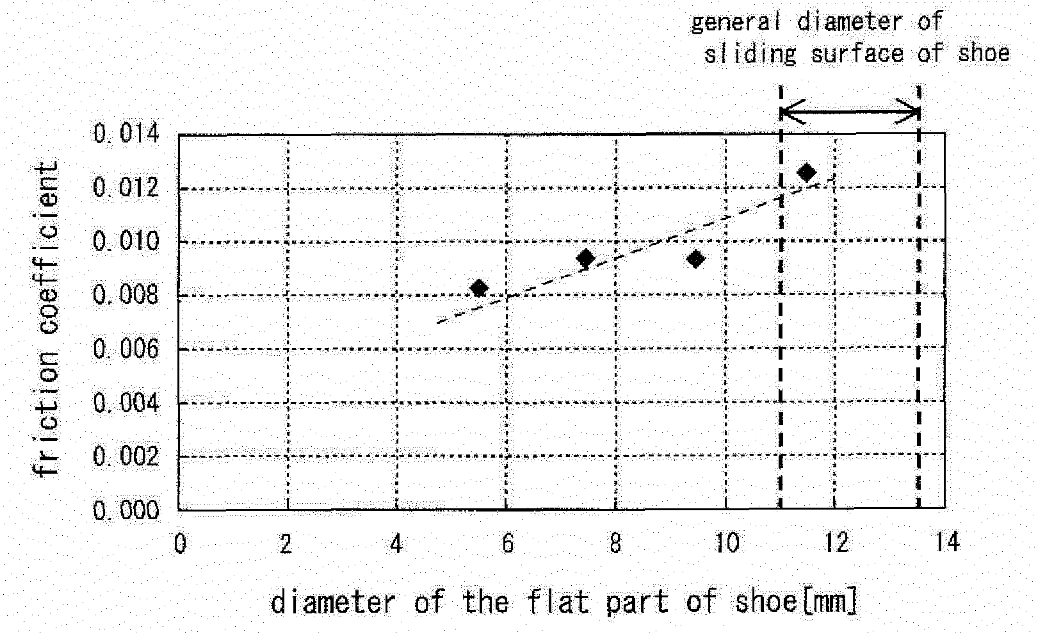
general diameter of sliding surface of shoe
friction coefficient
0.014
0.012
0.010
0.008
0.006
0.004
0.002
0.000
0
2
4
6
8
10
12
14
diameter of the flat part of shoe[mm]

Fig. 8

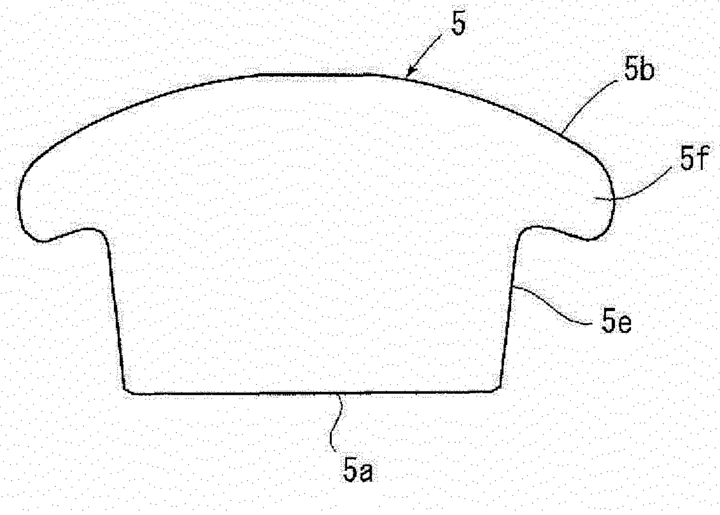
5
5b
5f
5e
5a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2002075172 A